Europäisches Patentamt

European Patent Office

Office européen des brevets

(19)

(11) Veröffentlichungsnummer : **0 052 722**
**B1**

(12) **EUROPÄISCHE PATENTSCHRIFT**

(45) Veröffentlichungstag der Patentschrift :
20.02.85

(21) Anmeldenummer : 81107898.9

(22) Anmeldetag : 05.10.81

(51) Int. Cl.⁴ : **C 05 F   3/06**

(54) Verfahren und Vorrichtung zur Trennung eines flüssigen Abfallproduktes, wie Gülle und Klärschlamm, in eine feste und flüssige Phase.

(30) Priorität : 22.11.80 DE 3044022
27.05.81 DE 3121063

(43) Veröffentlichungstag der Anmeldung :
02.06.82 Patentblatt 82/22

(45) Bekanntmachung des Hinweises auf die Patenterteilung : 20.02.85 Patentblatt 85/08

(84) Benannte Vertragsstaaten :
BE CH FR GB IT LI NL SE

(56) Entgegenhaltungen :
CH-A-   121 822
DE-A- 2 943 962
FR-A-   322 229
FR-A- 2 327 203
FR-A- 2 381 729
US-A- 4 191 647

(73) Patentinhaber : Brinkmann, Heinrich Bernhard
Kamer Heide 30
D-4619 Bergkamen-Overberge (DE)

(72) Erfinder : Knepper, Hermann
Zur Vogelruthe 22
D-4716 Olfen (DE)

(74) Vertreter : Eichelbaum, Lambert, Dipl.-Ing.
Michaelstrasse 4
D-4350 Recklinghausen 2 (DE)

**Beschreibung**

Die Erfindung betrifft ein Verfahren zur Herstellung von Festdünger durch Trennung von Gülle in eine feste und flüssige Phase mittels eines Filterbeckens, in welches die Gülle eingebracht und solange in ruhendem Zustand belassen wird, bis sich eine feste Phase oben und eine flüssige Phase unten abgesetzt haben und sodann durch Öffnen von mindestens einer verschließbaren Abflußöffnung die flüssige Phase durch diese abgeleitet wird (DE-C-2 943 962).

Dieses Verfahren zeichnet sich gegenüber damit vergleichbaren Verfahren insbesondere dadurch aus, daß mit ihm in zeit- und kostensparender Weise die flüssige von der festen Phase der Gülle durch ein modifiziertes Abfließen der flüssigen Phase in einem zeitlich regelbaren Filterprozeß getrennt wird, wozu grundsätzlich weder ein komplizierter Aufbau noch Betriebskosten in Form von Öl, Gas oder Strom erforderlich sind.

Es wurde nun gefunden, daß das vorgenannte Verfahren nach der DE-C-2 943 962 zeitlich noch kürzer und damit wirtschaftlicher betrieben sowie genauer und ohne personelle Hilfe geregelt werden kann, wenn gemäß der vorliegenden Erfindung der Boden des Filterbeckens unter eine Flüssigkeit gesetzt, hiernach die Gülle eingefüllt und nach Absetzen der festen Phase die flüssige Phase so weit abgelassen wird, bis die feste Phase etwa den Boden des Filterbeckens erreicht hat und daß dann der Abfluß der flüssigen Phase unterbrochen wird und erneut ein Absetzen der festen Phase oben und der flüssigen Phase unten abgewartet und der Abfluß sodann wieder geöffnet wird.

Da der Boden des Filterbeckens von einem landwirtschaftlichen Fahrzeug, z. B. einem Trecker, zur Entleerung der festen Phase befahrbar sein muß, besteht die Gefahr, daß die Öffnungen des Filterbeckens von festgefahrenen Partikeln der festen Phase zugesetzt werden können. Dies wird dadurch vermieden, daß vor dem Einfüllen der Gülle der Boden des Filterbeckens zunächst unter eine Flüssigkeit gesetzt wird, welche die festen Partikel in den Filteröffnungen entweder aufweicht oder ausschwemmt. Außerdem wird auf diese Weise vermieden, daß beim Einfüllen der Gülle feste Bestandteile vor Eintritt des Absetzvorganges in die Filteröffnungen gelangen können. Ein Abdecken dieser Filteröffnungen ist daher nach Einfüllen einer Flüssigkeit bis zum Boden des Filterbeckens nicht mehr erforderlich.

Außerdem wurde gefunden, daß nach dem erstmaligen Absetzvorgang und nach dem Ablassen der flüssigen Phase der Trocknungsprozeß dadurch beschleunigt werden kann, daß ein weiterer Absetzvorgang abgewartet wird, die flüssige Phase erneut nur so weit abgelassen wird, bis die feste Phase etwa den Boden des Filterbeckens erreicht hat und dann der Abfluß der flüssigen Phase unterbrochen wird. Wird dieser Absetzvorgang auf diese Weise drei- bis viermal wiederholt, kann der Trocknungsprozeß erheblich verkürzt werden.

Dieses stufenweise Ablassen der flüssigen Phase wird erfindungsgemäß solange wiederholt, bis ein nennenswerter Absetzvorgang von flüssiger und fester Phase nicht mehr stattfindet. Erst nach dem letzten Absetzvorgang werden sämtliche vorhandenen Abflußöffnungen des Filterbeckens geöffnet und die im Filterbecken zurückbleibende feste Phase von ihrem Boden her durch natürliche Konvektion belüftet. Diese natürliche Konvektion kann nach der in der DE-C-2 943 962 beschriebenen Art erfolgen.

Darüber hinaus bietet dieses Verfahren den Vorzug, daß die Vorrichtung zu seiner Durchführung vereinfacht werden kann. Dabei wird davon ausgegangen, daß diese Vorrichtung aus einem Filterbecken aus Beton mit einer Filterplatte und darin vorhandenen Durchflußöffnungen sowie mit einer darunter unter Freilassung eines Zwischenraumes angeordneten, undurchlässigen Unterplatte besteht, die in Richtung auf mindestens eine Abflußöffnung hin mit einer Oberflächenneigung versehen ist. Die Vereinfachung erfolgt nunmehr dadurch, daß die Filterplatte als Spaltboden ausgebildet ist, dessen Spalte durch Siebroste abgedeckt sind. Da dieser Spaltboden nach dem neuen erfindungsgemäßen Verfahren nunmehr durch einen « Flüssigkeitsstopfen » aus z. B. Wasser bzw. flüssiger Phase der Gülle verschlossen wird, sind Abdeckfolien oder dgl. nicht mehr erforderlich. Außerdem gewährleistet der Spaltboden ein rasches Abfließen der flüssigen Phase in den Raum zwischen Filterplatte und Unterplatte. Selbst wenn die Öffnungen der Siebroste durch Befahren der Filterplatte mittels eines Treckers durch feste Phasenteile zugesetzt worden sein sollten, können diese vor dem nächsten Füllvorgang durch die bis zur Oberkante des Bodens reichende Flüssigkeit freigeschwemmt werden. Das gilt insbesondere dann, wenn vor dem Einfüllen der Gülle Wasser bis mindestens zur Oberkante des Bodens von unten her durch den Boden des Filterbeckens geleitet wird.

Eine einfache und äußerst tragfähige Filterplatte wird dadurch erzielt, daß der Spaltboden aus im Querschnitt trapezoedalen Betonstürzen gebildet ist, die in Richtung auf die Unterplatte hin eine konische Form und an ihrer dem Beckeninnenraum zugewandten Seite Ausklinkungen aufweisen, in denen die Siebroste bündig zur Oberkante aufgelegt sind. Dabei liegen die Betonstürze auf zu ihrer Längsrichtung querverlaufenden Lagerstützen und sind beidendig auf Sockeln der Beckenwände gelagert, wodurch wiederum letztere einen äußerst stabilen Halt erfahren.

Vorteilhaft sind die Unterplatte sowie sämtliche Fugen zwischen ihr und den Beckenwänden mit einem gegen korrosive Flüssigkeiten resistenten Material abgedichtet. Um einerseits den Zwischenraum zwischen Filterplatte und Unterplatte vor dem Einlassen des den « Flüssigkeitsstopfen » bildenden Wassers verschießen und andererseits bei Einsetzen der konvektiven Belüftung rasch öffnen zu können,

**0 052 722**

weisen die Beckenwände zwischen Filterplatte und Unterplatte mehrere Öffnungen auf, die mittels von außen zu betätigender Stopfen auf der Beckeninnenseite druckwasserdicht verschließbar sind. Diese Stopfen können beispielsweise aus zwei durch eine mit einem Schlitz versehene Stange verbundenen Tellern bestehen, von denen der eine Teller bei Eintreiben eines Keiles in den Schlitz der Stange dichtend gegen die Öffnung in der Beckenwand gezogen wird.

Um das neue Filterverfahren verzögerungsfrei sowie ohne Zuhilfenahme von Bedienungspersonal vornehmen zu können, mündet in die Abflußöffnung in der Unterplatte eine Abflußleitung ein, in der ein über einen Stellmotor zu öffnendes und zu schließendes Ventil sowie in Durchflußrichtung vor dem Ventil eine Förderpumpe angeordnet sind. Dabei wird vorteilhaft der Einsatz des Stellmotors und der Förderpumpe durch eine Regeleinrichtung bestimmt, die wiederum von einem Niveauschalter und einem Regelrohr steuerbar ist.

Der Niveauschalter besteht vorteilhaft aus einem höhenverstellbaren Schwimmschalter, der nach Einfüllen der Gülle mit seiner Unterkante auf dem Güllepegel aufsetzbar ist. Denn sobald sich die feste Phase von der flüssigen Phase trennt, setzt in der oben schwimmenden festen Phase ein Gärungsprozeß ein. Dieser Gärungsprozeß ist mit einer Niveauanhebung der Oberfläche der festen Phase verbunden. Sobald diese Niveauanhebung 4 cm bis 5 ausmacht, hat sich unterhalb der festen Phase die flüssige Phase so weit abgesetzt, daß mit deren Abzug begonnen werden kann. In diesem Zeitpunkt ist der Schwimmschalter von der Oberschicht der festen Phase in eine andere Lage, z. B. von einer hängenden vertikalen Lage in eine Horizontallage gekippt worden, wodurch die Kontakte des Schwimmschalters geschlossen und der Regeleinrichtung der Steuerbefehl erteilt werden, das Ventil zu öffnen und hiernach die Förderpumpe einzuschalten.

Nach dem erfindungsgemäßen Verfahren soll jedoch der Abfluß der flüssigen Phase unterbrochen werden, sobald die feste Phase etwa den Boden des Filterbeckens erreicht hat. Dieser Verfahrensvorgang wird durch das Regelrohr bewerkstelligt. Dieses Regelrohr besteht aus einem auf einer Bodenöffnung, z. B. auf einem Siebrost, ortsfest aufgesetzten, beidendig offenen sowie an seinem oberen Ende den größtmöglichen Güllepegel überragenden Kunststoffrohr, welches eine geschlossene Wandung aufweist, in der nahe der Filterplatte sowie in einem Abstand darüber je ein von einem in ihm frei beweglichen, eisenhaltigen Schwimmball betätigbarer Magnetschalter angeordnet ist. Durch diese Anordnung bildet das Kunststoffrohr zum übrigen Filterbecken ein kommunizierendes Gefäß. Da das untere Ende dieses Kunststoffrohres oberhalb einer Bodenöffnung angeordnet ist und das obere Ende aus dem größtmöglichen Güllepegel herausragt, kann sich der Innenraum dieses Regelrohres nur und ausschließlich von unten her mit flüssiger Phase füllen. Das wiederum bedeutet, daß der statische Druck der in ihm vorhandenen Flüssigkeitssäule gleich dem statischen Druck des aus fester und flüssiger Phase bestehenden Inhalts des Filterbeckens ist. Wenn nun erfindungsgemäß die flüssige Phase im Filterbecken durch Öffnen des Ventils und Anschalten der Förderpumpe in der Abflußleitung in Gang gesetzt wird, sinkt zwangsläufig auch der Flüssigkeitspegel in dem Regelrohr und damit auch der auf ihm schwimmende eisenhaltige Ball, der vorteilhaft eine korrosionsfreie Außenschicht aufweist.

Sobald der Flüssigkeitspegel im Regelrohr in die Nähe der Filterplatte gelangt, betätigt der auf ihm schwimmende Stahlblechball den vorteilhaft in der Wandung des Kunststoffrohres eingelassenen Magnetschalter, der wiederum über die Regeleinrichtung die Förderpumpe abschaltet und den Stellmotor zum Schließen des Ventils veranlaßt.

Hiernach wird erfindungsgemäß erneut ein Absetzen der festen Phase oben und der flüssigen Phase unten abgewartet. Dieser Absetzvorgang macht sich im Regelrohr durch ein Ansteigen des Flüssigkeitspegels bemerkbar. Mit dem Flüssigkeitspegel steigt auch der auf ihm schwimmende Stahlblechball. Sobald der Flüssigkeitspegel eine gewisse Höhe oberhalb der Filterplatte und damit oberhalb des Bodens des Filterbeckens erreicht hat, betätigt der Schwimmball einen weiteren Magnetschalter, der wiederum über die Regeleinrichtung den Stellmotor zum Öffnen des Ventils veranlaßt und anschließend die Förderpumpe einschaltet. Da zu diesem Zeitpunkt der den Filtervorgang auslösende Schwimmschalter aufgrund des abgesunkenen Pegels der flüssigen Phase wiederum in senkrechter Lage hängt und seine Kontakte somit unterbrochen sind, kann eine Schaltungsstörung in Bezug auf den letztbeschriebenen Magnetschalter nicht eintreten. Allerdings ist wesentlich, daß beim Einfüllen des Güllepegels und bei Beginn des Absetzvorganges der Schwimmschalter über die Regeleinrichtung in Priorität vor den Magnetschaltern das erstmalige Öffnen des Ventils und das erstmalige Anschalten der Förderpumpe auslöst.

Um das jeweilige Einsetzen des Ablaß- und Unterbrechungsvorganges der flüssigen Phase, das je nach Gülleart sehr unterschiedlich beschaffen sein kann, individuell einstellen zu können, ist nach einer besonders vorteilhaften Weiterbildung der Erfindung der Abstand der Magnetschalter von der Filterplatte sowie voneinander verstellbar.

Erst nach dem letztmaligen Ablassen der flüssigen Phase sind sowohl die auf den Siebrosten angeordneten, an sich bekannten Filterrohre als auch die von außen zu betätigenden Stopfen in den Beckenwänden zu öffnen, um die in der Hauptanmeldung beschriebene, intensive konvektive Belüftung der im Filterbecken verbliebenen festen Phase in Gang setzen zu können.

Hierzu sei bemerkt, daß die aus der Hauptanmeldung bekannten Filterrohre grundsätzlich nicht mehr erforderlich wären, jedoch ist unbestritten, daß sie die konvektive Belüftung und damit den Trocknungsprozeß der festen Phase nicht unerheblich beschleunigen.

3

Weiterhin wurde nun überraschend gefunden, daß sich das vorbeschriebene Verfahren auch auf solche flüssigen Abfallprodukte anwenden läßt, die nicht oder nicht ohne weiteres gärfähig sind und/oder selbsttätig eine Schwimmdecke bilden.

Dies geschieht in Weiterbildung der Erfindung dadurch, daß als Abfallprodukt Klärschlamm verwendet wird, der vor seiner Verweilzeit mit einem gärfähigen Zusatzstoff vermischt wird. Dabei wird der Klärschlamm je nach seiner Zusammensetzung mit dem Zusatzstoff etwa im Gewichtsverhältnis von 100 : 1 bis 100 : 1,6 gemischt. Dieses Gemisch bildet nach einer Verweilzeit gleichfalls eine Schwimmdecke, wobei sich die feste Phase oben und die flüssige Phase unten absetzt.

Ferner wird vorteilhaft als Zusatzstoff ein Gemenge aus feinspanigen Holzfasern, wie Säge- und Hobelspänen, oder ein Zusatzstoff aus Grünfasern, wie Gras, Brennesseln, Farne oder dgl., verwendet. Besonders vorteilhaft ist ein Zusatzstoff, der selbst als landwirtschaftliches Abfallprodukt kostengünstig anfällt, wie gehäckseltes Korn- und Maisstroh sowie Schilf.

Weitere vorteilhafte Ausgestaltungen sind aus den Ansprüchen 27 bis 34 sowie aus der Figurenbeschreibung zu entnehmen.

Das erfindungsgemäße Verfahren wird nachfolgend anhand einer neuen Filterbeckenanordnung und deren Regeleinrichtung in den Zeichnungen beschrieben. Dabei zeigen :

Figur 1 die teilweise Draufsicht auf das neue Filterbecken in leerem Zustand,

Figur 2 einen Schnitt nach der Linie II/II von Fig. 1,

Figur 3 die Ausschnittvergrößerung III von Fig. 2 und Fig. 6,

Figur 4 eine Ausschnittvergrößerung gemäß der Schnittlinie IV/IV von Fig. 1,

Figur 5 eine Schnittansicht durch das Regelrohr sowie eine teilweise Ansicht durch das Becken mit dem Schwimmschalter, und

Figur 6 eine schematische Darstellung der Anwendung des neuen Verfahrens auf Klärschlamm.

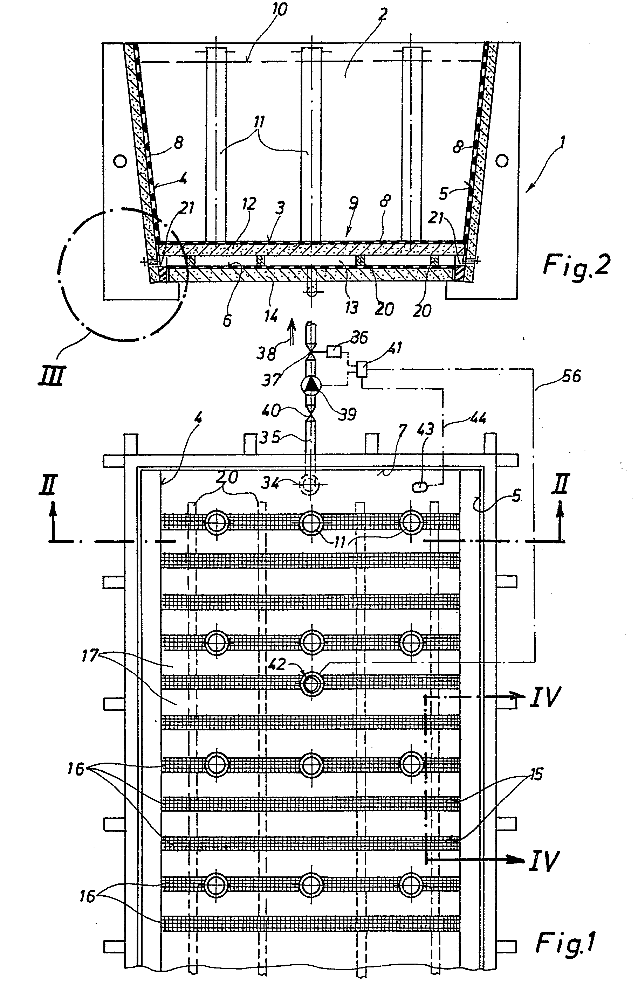

Das neue Filterbecken 1 zur Durchführung des noch an anderer Stelle zu beschreibenden Verfahrens besteht gemäß den Fig. 1 und 2 im wesentlichen aus einem befahrbaren Betonbecken 1, dessen mit Gülle 2 bzw. Klärschlamm 103 in Kontakt gelangende Flächen 3 bis 7 mit einem gegenüber korrosiven Flüssigkeiten resistenten Belag 8 versehen sind und auf dessen Boden 9 mehrere senkrecht stehende sowie dem höchstmöglichen Güllepegel 10 bzw. Gemischpegel 137 überragende Filterrohre 11 angeordnet sind.

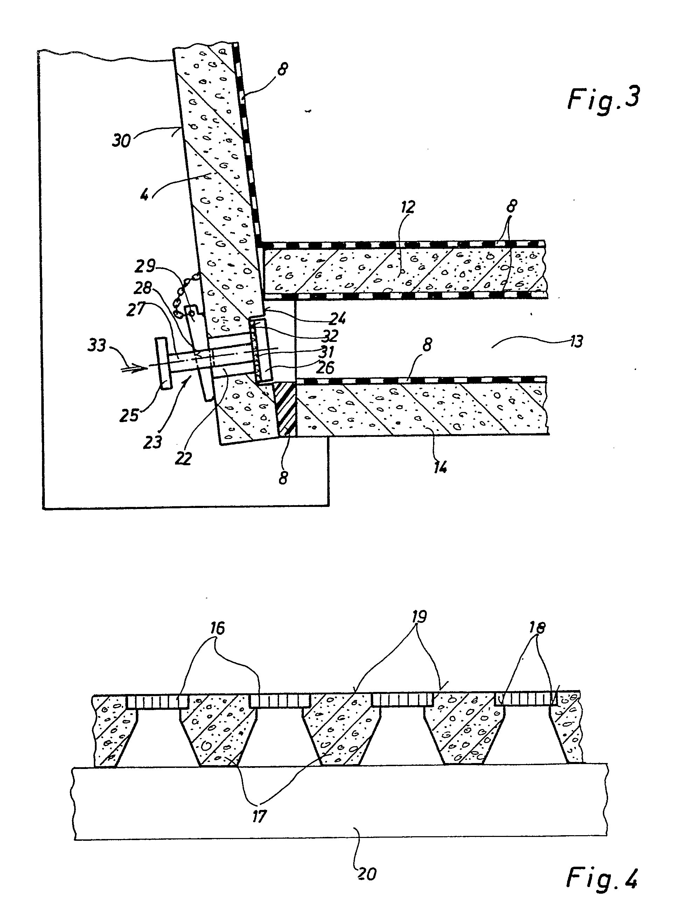

Der Boden 9 des Filterbeckens 1 wird durch eine Filterplatte 12 und einer darunter unter Freilassung eines Zwischenraumes 13 angeordneten, undurchlässigen Unterplatte 14 gebildet. Die Filterplatte 12 ist als Spaltboden ausgebildet, dessen Spalte 15 (s. Fig. 2) durch Siebroste 16 abgedeckt sind. Im übrigen wird die als Spaltboden ausgebildete Filterplatte 12 von im Querschnitt trapezoedalen Betonstürzen 17 gebildet, die in Richtung auf die Unterplatte 14 eine konische Form und an ihrer dem Beckeninnenraum zugewandten Seite Ausnehmungen 18 aufweisen (s. Fig. 4), in denen die Siebroste 16 bündig zur Oberkante 19 aufgelegt sind.

Die Betonstürze 17 liegen auf zu ihrer Längsrichtung querverlaufenden Lagerstützen 20 und beidendig auf Sockeln 21 der Beckenwände 4, 5 auf. Die Unterplatte 14 sowie sämtliche Fugen zwischen ihr und den Beckenwänden 4, 5, 7 sind mit dem gegen korrosive Flüssigkeiten resistenten Material 8 abgedichtet.

Wie insbesondere aus Fig. 3 in Verbindung mit Fig. 2 hervorgeht, weisen die Beckenwände 4, 5, 7 zwischen Filterplatte 12 und Unterplatte 14 mehrere Öffnungen 22 auf, die mittels von außen zu betätigender Stopfen 23 auf der Beckeninnenseite 24 druckwasserdicht verschließbar sind. Im dargestellten Fall bestehen diese Stopfen 23 aus zwei Tellern 25, 26, die durch eine Stange 27 verbunden sind. Die Stange 27 ist mit einem Schlitz 28 versehen, durch den ein Keil 29 von der Außenwandung 30 des Beckens 1 eingetrieben werden kann, wodurch sich der mit einer flexiblen Unterlagplatte 31 versehene Teller 26 dichtend gegen den Rücksprung 32 legt und somit die Öffnung 22 druckwasserdicht abdichtet. Zum Öffnen wird der Keil 29 mittels eines Hammers von unten her herausgeschlagen und der Stopfen 23 durch einen Schlag in Richtung des Pfeiles 33 gegen den Teller 25 aus seiner Verschlußlage in die Öffnungslage gedrückt. Dabei ist der Durchmesser des Tellers 25 größer als der Durchmesser der Öffnung 22, so daß der Stopfen 23 nicht in den Zwischenraum 13 zwischen Filterplatte 12 und Unterplatte 14 gelangen kann.

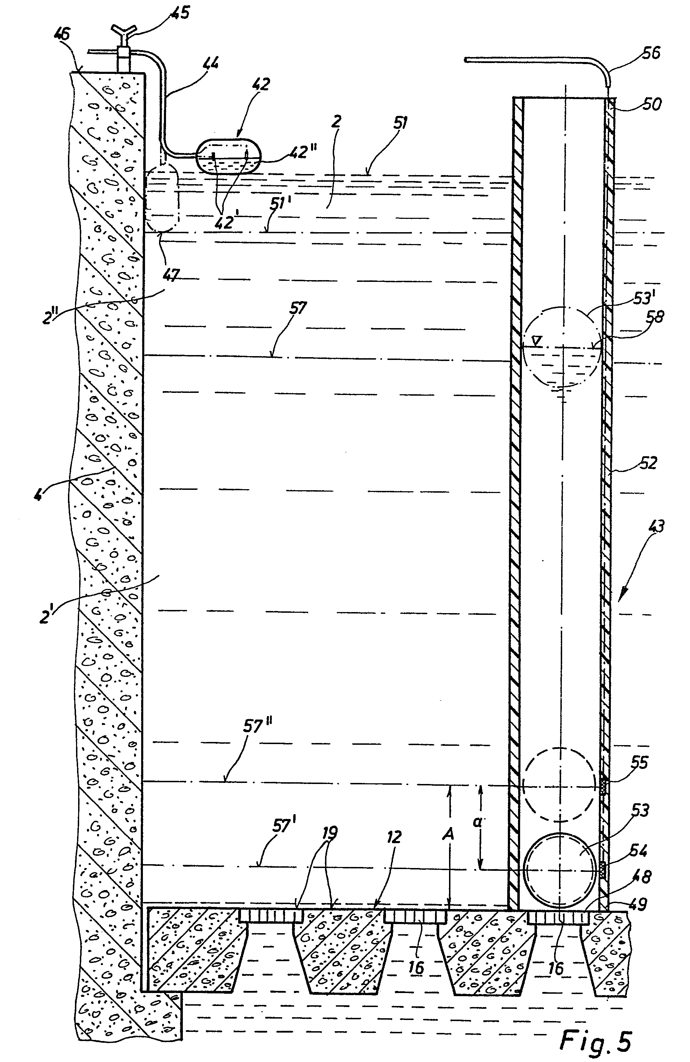

Wie aus Fig. 1 und 2 ersichtlich ist, mündet in die Abflußöffnung 34, zu welcher die Unterplatte 14 geneigt ist, eine Abflußleitung 35, in der ein über einen Stellmotor 36 zu öffnendes und zu schließendes Ventil 37 angeordnet ist. Außerdem ist in Durchflußrichtung des Pfeiles 38 vor dem Ventil 37 eine Förderpumpe 39 und vor dieser noch ein weiteres Ventil 40 zu einem eventuell erforderlichen Ausbau der Pumpe 39 angeordnet. Die Pumpe 39 ist grundsätzlich zur Durchführung des erfindungsgemäßen Verfahrens nicht erforderlich, unterstützt jedoch ein rasches Abfließen der flüssigen Phase und verkürzt somit gleichfalls die Trocknungszeit des Filterprozesses. Der Einsatz des Stellmotors 36 und der Förderpumpe 39 werden durch eine Regeleinrichtung 41 bestimmt, die wiederum von dem aus Fig. 5 ersichtlichen Niveauschalter 42 und einem Regelrohr 43 steuerbar ist. Der Niveauschalter 42 besteht im vorliegenden Fall aus einem flüssigkeitsdicht gekapselten Schwimmschalter 42, dessen gleichfalls flüssigkeitsabgedichtete Verbindungsleitung 44 über eine einfache Klemmvorrichtung 45, z. B. eine ortsfest auf der Oberkante 46 der Beckenwand 4 angeordnete Schraubzwinge, höhenverstellbar in den Beckeninnenraum mit seiner Unterkante 47 eingehängt werden kann.

Das Regelrohr 43 besteht aus einem auf einer Bodenöffnung 48, z. B. auf einem Siebrost 16, ortsfest aufgesetzten, an beiden Enden 49, 50 offenen sowie an seinem oberen Ende 50 den größtmöglichen Güllepegel 51 überragenden Kunststoffrohr 52, welches eine geschlossene, z. B. zylindrische, Wandung aufweist, in der nahe der Filterplatte 12 sowie in einem Abstand A darüber je ein von einem in ihm frei beweglichen, eisenhaltigen Schwimmball 53 betätigbarer Magnetschalter 54, 55 angeordnet ist. Die Magnetsschalter 54, 55 sind flüssigkeitsdicht in der Wandung des Rohres 52 gekapselt und darin ebenso wie die Verbindungsleitung 56 angeordnet, die aus dem oberen Ende 50 des Regelrohres 43 herausgeführt und mit der Regeleinrichtung 41 verbunden ist. Der Schwimmball 53 weist vorteilhaft einen rostfreien Überzug oder ein sonstiges Stahlblech auf, welches gegen Korrosionen geschützt ist.

Zum erstmaligen Öffnen des Ventiles 37 über den Stellmotor 36 und zum erstmaligen Anschalten der Pumpe 39 ist der Schwimmschalter 43 über die Regeleinrichtung 41 in Priorität vor dem Magnetschalter 55 geschaltet.

Der der Filterplatte 12 nächstgelegene Magnetschalter 54 schließt über die Regeleinrichtung 41 das Ventil 37 und schaltet zugleich die Pumpe 39 ab. Der im Abstand A über der Filterplatte 12 gelegene Magnetschalter 55 öffnet wiederum über den Stellmotor 36 das Ventil 37 und schaltet die Pumpe 39 an. Sowohl der Abstand A des Magnetschalters 55 von der Filterplatte 12 als auch der Abstand a der Magnetschalter 54, 55 untereinander ist vorteilhaft verstellbar und somit auf die jeweilige Gülleart und auf den jeweils gewünschten Filterzeitpunkt einjustierbar.

Das erfindungsgemäße Verfahren geht wie folgt vonstatten :

Die aus Fig. 3 in Verbindung mit Fig. 2 an mehreren Stellen der Beckenwände angeordneten Öffnungen 22 werden durch die von außen zu betätigenden Stopfen 23 in der beschriebenen Weise mittels der Keile 29 verschlossen. Sodann wird der gesamte Zwischenraum einschließlich der Siebroste 16 durch eine nichtdargestellte Leitung von unten her bis mindestens zur Oberkante 19 (s. Fig. 4) unter eine Flüssigkeit, z. B. unter Wasser, gesetzt. Hiernach wird die Gülle in das Filterbecken 1 von oben her eingefüllt. Da das von unten her bis mindestens zur Oberkante 19 eingelassene Wasser einen « Flüssigkeitsstopfen » bildet, dessen Abfluß durch den Verschluß des Ventils 37 gehindert ist, kann die von oben her eingefüllte Gülle 2 mit ihren festen Bestandteilen die Siebroste 16 nicht verschließen.

Nach Einfüllen der Gülle 2 soll dessen Niveau das Becken bis zu dem in Fig. 5 strichpunktiert eingezeichneten Pegel 51' füllen. Sodann wird der Schwimmschalter 42 über die Klemmvorrichtung 45 so weit in das Becken 1 eingehängt, bis dessen Unterkante 47 auf den Pegel 51' der Gülle 2 aufsetzt. Sobald sich die feste Phase oben und die flüssige Phase unten im Filterbecken 1 abgesetzt haben, beginnt der Gärungsprozeß der festen Phase. Dieser Gärungsprozeß ist mit einem hefeartigen Anheben des Pegels 51' der festen Phase auf beispielsweise das Niveau 51 verbunden, welches beispielsweise mehrere Zentimeter betragen kann. Dies führt dazu, daß der Schwimmschalter 42 aus seiner in Fig. 5 strichpunktiert eingezeichneten Vertikallage in die durchgezogene Horizontallage übergeführt wird. Bei Erreichen der Horizontallage, das heißt bei einem Umkippen des Schwimmschalters 42 werden die Kontakte 42' beispielsweise durch eine darin befindliche Quecksilbermenge 42'' geschlossen und über die Leitung 44 der Regeleinrichtung 41 ein Stromimpuls erteilt, welcher wiederum dem Stellmotor 36 den Befehl erteilt, das Ventil 37 zu öffnen und hiernach die Förderpumpe 39 einzuschalten. In dem Augenblick wird zunächst das Wasser und hiernach die abgesetzte, flüssige Phase der Gülle 2 über die Leitung 35 in ein nichtdargestelltes Sammelbecken geleitet.

Sobald die Unterseite der festen Phase in die Nähe der Filterplatte 12 abgesunken ist, muß zur Vermeidung eines weiteren Absinkens das Ventil 37 wieder geschlossen und die Pumpe 39 abgeschaltet werden. Dies wird durch das Regelrohr 43 bewerkstelligt. Es wird unterstellt, daß bei Beginn des Ablassens der flüssigen Phase der Gülle 2 der statische Druck in dem Regelrohr 43 so beschaffen ist, daß der Flüssigkeitspegel in dem Regelrohr 43 nur geringfügig oberhalb des Flüssigkeitspegels der flüssigen Phase endet. Die Trennlinie zwischen der flüssigen Phase 2' und der festen Phase 2'' der Gülle 2 ist in Fig. 5 zu diesem Zeitpunkt mit der strichpunktierten, eingezeichneten Linie 57 bezeichnet. In diesem Fall soll der Flüssigkeitspegel im Regelrohr 43 sich etwa bei dem strichpunktiert eingezeichneten Niveau 58 (oder darüber) befinden, so daß zu diesem Zeitpunkt der Schwimmball 53 die strichpunktiert eingezeichnete Lage 53' einnimmt. Beim Absinken des Pegels 57 der flüssigen Phase 2' sinkt im Regelrohr 43 dementsprechend auch der Flüssigkeitspegel 58 und damit der auf ihm schwimmende Schwimmball 53. Sobald der Schwimmball 53 den Magnetschalter 54 passiert, wird über die Leitung 56 der Regeleinrichtung 41 ein Stromimpuls erteilt, der wiederum ein Abschalten der Pumpe 39 und ein Schließen des Ventils 37 veranlaßt. Da während dieses Vorganges der Schwimmschalter 42 wiederum seine strichpunktiert in Fig. 5 angedeutete Hängelage einnimmt und somit die Kontakte 42' voneinander getrennt sind, ist in der Regeleinrichtung 41 nach erstmaligem Schaltvorgang ein Halterelais erforderlich, welches zumindest bis zum Absinken des Schwimmballes 53 zum Magnetschalter 54 den einmal hergestellten Kontakt nicht unterbrechen läßt.

Nachdem der Flüssigkeitspegel 57 etwa auf das Niveau 57' abgesunken ist und der Schwimmball 53 über den Magnetschalter 54 die Pumpe 39 abgeschaltet und das Ventil 37 geschlossen hat, beginnt die Gülle erneut sich abzusetzen, das heißt, daß sich eine feste Phase oben und eine flüssige Phase unten bildet. Dementsprechend steigt auch in dem Regelrohr 43 wiederum der Flüssigkeitspegel vom Niveau 57' beispielsweise auf das Niveau 57''. Ein Ansteigen des Flüssigkeitspegels ist jedoch gleichfalls mit einem Ansteigen des darauf schwimmenden Balles 53 verbunden. Sobald dieser den Magnetschalter 55 in Aufwärtsrichtung passiert, wird über die Leitung 56 erneut ein Stromimpuls der Regeleinrichtung 41 zugeleitet, die sodann wiederum über den Stellmotor 36 das Ventil 37 öffnet und hiernach die Pumpe 39 anschaltet. Beim Absinken des Flüssigkeitspegels 57" auf das Niveau 57' wird beim Passieren des Schwimmballes 53 wiederum der Magnetschalter 54 betätigt und wiederum die Pumpe 39 abgeschaltet und das Ventil 37 geschlossen. Dieser Vorgang wird je nach Gülleart, z. B. drei- bis viermal, wiederholt. Hiernach ist der Trennungsprozeß von fester und flüssiger Phase so weit fortgeschritten, daß mit der Resttrocknung begonnen werden kann. Zu diesem Zweck wird unter Abschaltung der Regeleinrichtung 41 das Ventil 37 geöffnet und die Pumpe 39 in abgeschalteter Betriebsstellung belassen. Sobald die Flüssigkeit aus dem Zwischenraum 13 zwischen Filterplatte 12 und Unterplatte 14 abgeflossen ist, werden die aus Fig. 2 ersichtlichen Filterrohre 11 geöffnet, so daß nunmehr auch hierüber in der Mitte der festen Phase befindliche Flüssigkeit ablaufen kann. Ebenso werden die Öffnungen 22 durch entsprechendes Betätigen der Verschlußstopfen 23 geöffnet. Dadurch wiederum kann atmosphärische Außenluft durch die Öffnungen 22 in den Zwischenraum 13 und von dort konvektiv durch die Siebroste 16 nach oben durch die feste Phase der Gülle 2 strömen und diese somit einer raschen Resttrocknung unterzogen werden.

Nach der Resttrocknung wird eine Filterbeckenseite, z. B. die Filterbeckenwand 7, herausgenommen bzw. umgelegt, die Filterrohre 11 sowie das Regelrohr 43 herausgenommen, so daß ein Trecker den Boden 9 auf der Filterplatte 12 zur Ausräumung der festen und getrockneten Phase befahren kann. Hierbei ist unvermeidlich, daß Bestandteile der festen Phase in die Siebroste 16 gedrückt werden. Das ist jedoch insofern unbeachtlich, wie diese Bestandteile vor der erneuten Füllung des Filterbeckens 1 mit Gülle 2 durch das zuvor in den Zwischenraum 13 bis zur Oberkante 19 (s. Fig. 3 und 4) einzulassende Wasser (Flüssigkeitsstopfen) aufgeweicht bzw. nach oben hin ausgeschwemmt werden.

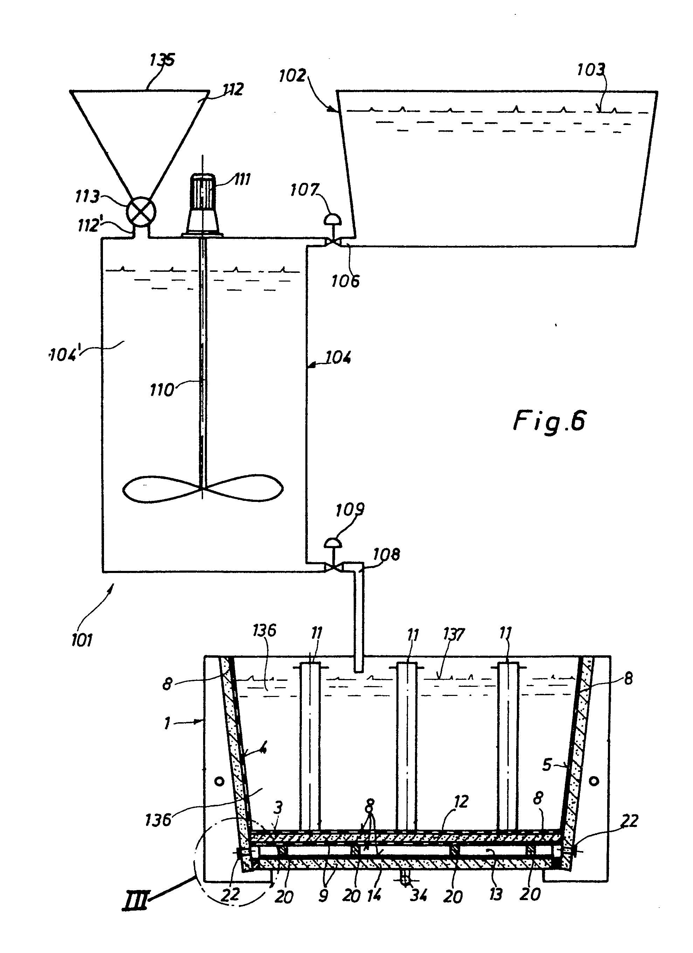

Gemäß Fig. 6 besteht die neue Vorrichtung 101 zur Durchführung des vorbeschriebenen Verfahrens aus einem Vorratsbecken 102, in welchem Klärschlamm 103 gesammelt wird, einem Behälter 104 und dem Filterbecken 1. Das Vorratsbecken 102 ist über die Verbindungsleitung 106 und das Ventil 107 mit dem Behälter 104 verbunden, der seinerseits über die Abflußleitung 108 und das Ventil 109 mit dem Filterbecken 1 in Verbindung steht. Die Ventile 107, 109 sind vorteilhaft als pneumatisch betätigbare Quetschventile ausgeführt.

Der Behälter 104 ist in seinem Innenraum 104' mit einer Rührvorrichtung 110 versehen, die über den Motor 111 in Betrieb zu setzen ist. Oberhalb des Behälters 104 befindet sich ein Trichter 112, an dessen Ausgangsstutzen 112' zum Behälter 104 eine Dosiervorrichtung 113 angeordnet ist.

Das Filterbecken 1 ist gemäß den Fig. 1 bis 5 aufgebaut.

Gemäß Fig. 6 ist das Vorratsbecken 102 höher als der Behälter 104 und dieser wiederum höher als das Filterbecken 1 angeordnet, so daß der Klärschlamm 103 unter seiner Schwerkraft über die Verbindungsleitung 106 und das Quetschventil 107 in den Behälter 104 und von dort nach Erhalt der gärfähigen Zusatzstoffe über das Quetschventil 109 und die Abflußleitung 108 in das Filterbecken 1 gelangen kann. Durch diese Anordnung sind somit außer der Antriebsenergie für den Elektromotor 111 der Rührvorrichtung 110 sowie für die Dosiervorrichtung 113 keine weiteren Energien erforderlich.

Bezüglich des Klärschlammes 103 arbeitet das erfindungsgemäße Verfahren wie folgt :

Im Vorratsbehälter 102 wird Klärschlamm 103 gelagert. Dieser gelangt über die Verbindungsleitung 106 und das Quetschventil 107 in den Behälter 104. Über die Dosiervorrichtung 113 wird aus dem trichterförmigen Speicher 112 ein gärfähiger Zusatzstoff 135 in einem Gewichtsverhältnis von etwa 100 : 1 bis 100 : 1,6 zugesetzt. Das Zusetzen dieses Zusatzstoffes 135 wird vorteilhaft intervallweise während des Einfließens des Klärschlammes 103 in den Behälter 104 durchgeführt, um auf diese Weise eine möglichst gleichmäßige Gesamtverteilung des gärfähigen Zusatzstoffes 135 im Klärschlamm 103 zu erreichen. Die Rührvorrichtung 110 rührt sodann den Klärschlamm gemeinsam mit den bereits zugemengten Zusatzstoffen 135 durcheinander, wodurch Sauerstoff an das Gemisch 136 gelangt und der Gärungsprozeß beschleunigt wird.

Dabei wird als Zusatzstoff 135 in den trichterförmigen Speicher 112 entweder ein Gemenge aus feinspanigen Holzfasern, wie Säge- oder Hobelspänen, oder ein Gemisch aus Grünfasern, wie Gras, Brennesseln, Farne oder dgl., oder als Zusatzstoff landwirtschaftliche Abfallprodukte, wie gehäckseltes Korn- und Maisstroh, Schilf oder dgl., beigemengt. Es ist jedoch auch möglich, tierische Exkremente beizumischen.

Nachdem der Boden 9 des Filterbeckens 1 nach vorherigem Schließen der Öffnungen 22 bis zu seiner Oberkante 19 mit Wasser gefüllt ist, wird über das Quetschventil 109 und die Abflußleitung 108 das Gemisch 136 aus Klärschlamm 103 und Zusatzstoff 135 in das Filterbecken 1 geleitet. Hierbei sind die Filterrohre 11 gleichfalls geschlossen. Nachdem das Gemisch 136 den Pegel 137 erreicht hat, wird der Zulauf durch Schließen des Quetschventils 109 unterbrochen. Sodann wird das Gemisch 136 im Filterbecken 1 solange in ruhendem Zustand belassen, bis sich eine feste Phase oben und eine flüssige Phase unten abgesetzt haben.

Auch das weitere Verfahren des Absetz- und Trocknungsprozesses des Gemisches 136 aus Klärschlamm 103 und Zusatzstoffen 135 erfolgt in der bei der Gülle beschriebenen, stufenartigen Weise :

Absetzen der festen Phase, Ablassen der flüssigen Phase — erneutes Absetzen der festen Phase, erneutes Ablassen der flüssigen Phase — und letztendlich die konvektive Belüftung durch die Filterplatte 12 und die Filterrohre 11 nach dem zu den Fig. 1 bis 5 beschriebenen Verfahren.

Sobald die Trocknung der festen Phase soweit fortgeschritten ist, daß sie von Hand wie ein torfähnliches Material zerbröselt werden kann, weist sie einen Wasserrestgehalt von höchstens 24 % auf und kann nach Herausziehen der Filterrohre 11 und Öffnen einer stirnseitigen Seitenwand mittels eines landwirtschaftlichen Fahrzeuges abgetragen und abtransportiert werden.

| Stückliste | | | | | | |
|---|---|---|---|---|---|---|
| Filterbecken | 1 | | | | | |
| Gülle | 2 | | | | | |
| flüssige Phase der Gülle 2 | 2' | | | | | |
| feste Phase der Gülle 2 | 2'' | | | | | |
| Klärschlamm | 103 | | | | | |
| Flächen von Filterbecken 1 | 3 | 4 | 5 | 6 | 7 | |
| Belag | 8 | | | | | |
| Boden von Filterbecken 1 | 9 | | | | | |
| Güllepegel bzw. Gemischpegel | 10 58 | 51 137 | 51' | 57 | 57' | 57'' |
| Filterrohre | 11 | | | | | |
| Filterplatte | 12 | | | | | |
| Zwischenraum | 13 | | | | | |
| Unterplatte | 14 | | | | | |
| Spalte | 15 | | | | | |
| Siebroste | 16 | | | | | |
| Betonstürze | 17 | | | | | |
| Ausnehmungen der Betonstürze 17 | 18 | | | | | |
| Oberkante | 19 | | | | | |
| Lagerstützen | 20 | | | | | |
| Sockel | 21 | | | | | |
| Öffnungen | 22 | | | | | |
| Stopfen | 23 | | | | | |
| Beckeninnenseite | 24 | | | | | |
| Teller | 25 | 26 | | | | |
| Stange | 27 | | | | | |
| Schlitz von Stange 27 | 28 | | | | | |
| Keil | 29 | | | | | |
| Außenwandung von Becken 1 | 30 | | | | | |

| | | | |
|---|---|---|---|
| Unterlagplatte | 31 | | |
| Rücksprung | 32 | | |
| Pfeil | 33 | 38 | |
| Abflußöffnung | 34 | | |
| Abflußleitung | 35 | 108 | |
| Stellmotor | 36 | | |
| Ventil | 37 | 40 | |
| Förderpumpe | 39 | | |
| Regeleinrichtung | 41 | | |
| Niveauschalter/Schwimmschalter | 42 | | |
| Kontakte von Niveauschalter 42 | 42' | | |
| Quecksilbermenge | 42" | | |
| Regelrohr | 43 | | |
| Verbindungsleitung | 44 | 56 | 106 |
| Klemmvorrichtung | 45 | | |
| Oberkante der Beckenwand 4 | 46 | | |
| Unterkante von Schwimmschalter 42 | 47 | | |
| Bodenöffnung | 48 | | |
| Enden von Kunststoffrohr 52 | 49 | 50 | |
| Kunststoffrohr | 52 | | |
| Abstand der Magnetschalter zur Filterplatte 12 | A | | |
| Abstand von Magnetschaltern 54, 55 | a | | |
| Magnetschalter | 54 | 55 | |
| strichpunktierte Linie | 57 | | |
| Vorrichtung | 101 | | |
| Vorratsbecken | 102 | | |
| Behälter | 104 | | |
| Behälterinnenraum | 104' | | |
| Ventil | 107 | 109 | |
| Rührvorrichtung | 110 | | |
| Motor | 111 | | |

**0 052 722**

(Fortsetzung)

| | |
|---|---|
| Trichter | 112 |
| Ausgangsstutzen | 112' |
| Dosiervorrichtung | 113 |
| Zusatzstoff | 135 |
| Gemisch | 136 |

**Ansprüche**

1. Verfahren zur Herstellung von Festdünger durch Trennung von Gülle in eine feste und flüssige Phase mittels eines Filterbeckens, in welches die Gülle eingebracht und solange in ruhendem Zustand belassen wird, bis sich eine feste Phase oben und eine flüssige Phase unten abgesetzt haben und sodann durch Öffnen von mindestens einer verschließbaren Abflußöffnung die flüssige Phase durch diese abgeleitet wird, dadurch gekennzeichnet, daß der Boden des Filterbeckens unter eine Flüssigkeit gesetzt, hiernach die Gülle eingefüllt und nach Absetzen der festen Phase die flüssige Phase soweit abgelassen wird, bis die feste Phase etwa den Boden des Filterbeckens erreicht hat, und daß dann der Abfluß der flüssigen Phase unterbrochen wird und erneut ein Absetzen der festen Phase oben und der flüssigen Phase unten abgewartet und der Abfluß sodann wieder geöffnet wird.

2. Verfahren nach Anspruch 1, dadurch gekennzeichnet, daß vor dem Einfüllen der Gülle Wasser bis mindestens zur Oberkante des Bodens in das Filterbecken geleitet wird.

3. Verfahren nach Anspruch 1 und 2, dadurch gekennzeichnet, daß das Wasser von unten her durch den Boden des Filterbeckens geleitet wird.

4. Verfahren nach den Ansprüchen 1 bis 3, dadurch gekennzeichnet, daß ein stufenweises Ablassen der flüssigen Phase solange wiederholt wird, bis ein nennenswerter Absetzvorgang von flüssiger und fester Phase nicht mehr stattfindet.

5. Verfahren nach den Ansprüchen 1 bis 4, dadurch gekennzeichnet, daß nach dem letzten Absetzvorgang sämtliche vorhandenen Abflußöffnungen des Filterbeckens geöffnet werden und die im Filterbecken zurückbleibende feste Phase vom Boden des Filterbeckens her durch natürliche Konvektion belüftet wird.

6. Vorrichtung zur Durchführung des Verfahrens nach den Ansprüchen 1 bis 5 mit einem Filterbecken aus Beton, mit einer Filterplatte und darin vorhandenen Durchflußöffnungen sowie mit einer darunter unter Freilassung eines Zwischenraumes angeordneten, undurchlässigen Unterplatte, die in Richtung auf mindestens eine Abflußöffnung hin mit einer Oberflächenneigung versehen ist, dadurch gekennzeichnet, daß die Filterplatte (12) als Spaltboden ausgebildet ist, dessen Spalte (15) durch Siebroste (16) abgedeckt sind.

7. Vorrichtung nach Anspruch 6, dadurch gekennzeichnet, daß der Spaltboden (12) aus im Querschnitt trapezoedalen Betonstürzen (17) gebildet ist, die in Richtung auf die Unterplatte (14) hin eine konische Form und an ihrer dem Beckeninnenraum zugewandten Seite Ausnehmungen (18) aufweisen, in denen die Siebroste (16) bündig zur Oberkante (19) aufgelegt sind.

8. Vorrichtung nach Anspruch 6 und 7, dadurch gekennzeichnet, daß die Betonstürze (17) auf zu ihrer Längsrichtung querverlaufenden Lagerstützen (20) und beidendig auf Sockeln (21) der Beckenwände (4, 5, 7) aufliegen.

9. Vorrichtung nach den Ansprüchen 6 bis 8, dadurch gekennzeichnet, daß die Unterplatte (14) sowie sämtliche Fugen zwischen ihr und den Beckenwänden (4, 5, 7) mit einem gegen korrosive Flüssigkeiten resistenten Material (8) abgedichtet sind.

10. Vorrichtung nach den Ansprüchen 6 bis 9, dadurch gekennzeichnet, daß die Beckenwände (4, 5, 7) zwischen Filterplatte (12) und Unterplatte (14) mehrere Öffnungen (22) aufweisen, die mittels von außen zu betätigender Stopfen (23) auf der Beckeninnenseite druckwasserdicht verschließbar sind.

11. Vorrichtung nach den Ansprüchen 6 bis 10, dadurch gekennzeichnet, daß in die Abflußöffnung (34) in der Unterplatte (14) eine Abflußleitung (35) mündet, in der ein über einen Stellmotor (36) zu öffnendes und zu schließendes Ventil (37) angeordnet ist.

12. Vorrichtung nach den Ansprüchen 6 bis 11, dadurch gekennzeichnet, daß in Durchflußrichtung (38) vor dem Ventil (37) eine Förderpumpe (39) in der Abflußleitung (35) angeordnet ist.

13. Vorrichtung nach den Ansprüchen 6 bis 11, dadurch gekennzeichnet, daß der Einsatz des Stellmotors (36) und der Förderpumpe (39) durch eine Regeleinrichtung (41) bestimmt ist, die wiederum von einem Niveauschalter (42) und einem Regelrohr (43) steuerbar ist.

14. Vorrichtung nach den Ansprüchen 6 bis 13, dadurch gekennzeichnet, daß der Niveauschalter (42) aus einem höhenverstellbaren Schwimmschalter besteht, der nach dem Einfüllen der Gülle (2) mit seiner Unterkante (47) auf dem Güllepegel (51) aufsetzbar ist.

15. Vorrichtung nach den Ansprüchen 6 bis 14, dadurch gekennzeichnet, daß das Regelrohr (43) aus einem auf einer Bodenöffnung (48), z. B. auf einem Siebrost (16), ortsfest aufgesetzten, beidendig offenen sowie an seinem oberen Ende (50) den größtmöglichen Güllepegel (51) überragenden Kunststoffrohr (52) besteht, welches eine geschlossene Wandung aufweist, in der nahe der Filterplatte (12) sowie in einem Abstand (A) darüber je ein von einem zu ihm frei beweglichen, eisenhaltigen Schwimmball (53) betätigbarer Magnetschalter (54, 55) angeordnet ist.

16. Vorrichtung nach Anspruch 15, dadurch gekennzeichnet, daß der Schwimmball (53) mit einer korrosionsfreien Außenschicht versehen ist.

17. Vorrichtung nach den Ansprüchen 6 bis 16, dadurch gekennzeichnet, daß der Schwimmschalter (42) in Priorität vor den Magnetschaltern (54, 55) über die Regeleinrichtung (41) das Öffnen des Ventils (37) und das Anschalten der Förderpumpe (39) auslöst.

18. Vorrichtung nach den Ansprüchen 6 bis 17, dadurch gekennzeichnet, daß der der Filterplatte (12) nächstgelegene Magnetschalter (54) das Ventil (37) schließt und zugleich die Pumpe (39) abschaltet.

19. Vorrichtung nach den Ansprüchen 6 bis 18, dadurch gekennzeichnet, daß der in Abstand (a) über dem der Filterplatte (12) nächstgelegenen Magnetschalter (54) angeordnete zweite Magnetschalter (55) wiederum das Ventil (57) öffnet und die Pumpe (39) anschaltet.

20. Vorrichtung nach den Ansprüchen 15 bis 19, dadurch gekennzeichnet, daß der Abstand (A) des Magnetschalters (55) von der Filterplatte (12) sowie der Abstand (a) der Magnetschalter (54, 55) voneinander verstellbar ist.

21. Vorrichtung nach den Ansprüchen 6 bis 20, dadurch gekennzeichnet, daß auf den Siebrosten (16) an sich bekannte Filterrohre (11) angeordnet sind, deren Filteröffnungen nach dem letztmaligen Ablassen der flüssigen Phase zu öffnen sind.

22. Verfahren zur Trennung eines flüssigen Abfallproduktes in eine feste und flüssige Phase mittels eines Filterbeckens, in welchem die Verweilzeit des in ruhendem Zustand belassenen Abfallproduktes solange ausgedehnt wird, bis sich die von der festen Phase gebildete Schicht oben und die flüssige Phase unten abgesetzt haben, und aus welchem sodann die flüssige Phase durch Öffnung mindestens einer verschließbaren Abflußöffnung abgeleitet wird, dadurch gekennzeichnet, daß als Abfallprodukt Klärschlamm verwendet wird, der vor seiner Verweilzeit mit einem gärfähigen Zusatzstoff vermischt wird.

23. Verfahren nach Anspruch 22, dadurch gekennzeichnet, daß der Klärschlamm je nach seiner Zusammensetzung mit dem Zusatzstoff etwa im Gewichtsverhältnis von 100 : 1 bis 100 : 1,6 gemischt wird.

24. Verfahren nach Anspruch 22 und 23, dadurch gekennzeichnet, daß als Zusatzstoff ein Gemenge aus feinspanigen Holzfasern, wie Säge- und Hobelspänen, verwendet wird.

25. Verfahren nach Anspruch 22 oder 23, dadurch gekennzeichnet, daß als Zusatzstoff Grünfasern, wie Gras, Brennesseln, Farne oder dgl., zugesetzt werden.

26. Verfahren nach Anspruch 22 oder 23, dadurch gekennzeichnet, daß als Zusatzstoff landwirtschaftliche Abfallprodukte, wie gehäckseltes Korn- und Maisstroh, Schilf oder dgl., beigemengt werden.

27. Verfahren nach einem oder mehreren der Ansprüche 22 bis 26, dadurch gekennzeichnet, daß der Boden des Filterbeckens unter eine Flüssigkeit gesetzt, hiernach das Gemisch aus Klärschlamm und Zusatzstoff eingefüllt und nach Absetzen der festen Phase die flüssige Phase soweit abgelassen wird, bis die feste Phase des Gemisches etwa den Boden des Filterbeckens erreicht hat, und daß dann der Abfluß der flüssigen Phase unterbrochen wird und erneut ein Absetzen der festen Phase oben und der flüssigen Phase unten abgewartet und der Abfluß sodann wieder geöffnet wird.

28. Verfahren nach den Ansprüchen 22 bis 27, dadurch gekennzeichnet, daß vor dem Einfüllen des Gemisches aus Klärschlamm und Zusatzstoff Wasser bis mindestens zur Oberkante des Bodens in das Filterbecken geleitet wird.

29. Verfahren nach den Ansprüchen 22 bis 28, gekennzeichnet durch die Merkmale der Ansprüche 3 bis 5.

30. Vorrichtung zur Durchführung des Verfahrens nach den Ansprüchen 22 bis 29, dadurch gekennzeichnet, daß sie aus einem Filterbecken (1) gemäß den Merkmalen der Ansprüche 6 bis 21 besteht, dem ein Behälter (104) mit einer Rührvorrichtung (110) und einer Dosiervorrichtung (112, 113) für den Zusatzstoff (135) zugeordnet ist.

31. Vorrichtung nach Anspruch 30, dadurch gekennzeichnet, daß dem Behälter (104) ein Vorratsbecken (102) für den Klärschlamm (103) vorgeschaltet ist.

32. Vorrichtung nach den Ansprüchen 30 und 32, dadurch gekennzeichnet, daß das Vorratsbecken (102) höher als der Behälter (104) und dieser (104) höher als das Filterbecken (1) angeordnet sind.

33. Vorrichtung nach den Ansprüchen 30 bis 32, dadurch gekennzeichnet, daß die Verbindungsleitungen (106) zwischen dem Vorratsbecken (102) und dem Behälter (104) einerseits und letzterem (104) und dem Filterbecken (1) andererseits durch Quetschventile (107, 109) zu verschließen und zu öffnen sind.

34. Vorrichtung nach den Ansprüchen 30 bis 33, dadurch gekennzeichnet, daß dem Behälter (104) ein Vorratstrichter (112) für den Zusatzstoff (135) zugeordnet sowie in seinem Innenraum (104') eine Rührvorrichtung (110) angeordnet ist.

**Claims**

1. A process for manufacturing solid fertilizer by separating liquid manure into solid liquid and phases by means of a filtering basin, into which the liquid manure is placed and left to settle until a solid phase has formed at the top and a liquid phase at the bottom, and then draining off the liquid phase by opening at least one drain outlet, characterised in that a liquid is first introduced into the bottom of the filter basin and then the liquid manure is added and, after formation of the solid phase, the liquid phase is drained away until the solid phase comes approximately to the bottom of the filter basin, and in that the outflow of the liquid phase is then discontinued and a new formation of the solid phase at the top and the liquid phase at the bottom is awaited, when the drain is re-opened.

2. A process according to claim 1, characterised in that, before the addition of liquid manure, water is introduced into the bottom of the filter basin up to at least the upper edge of the bottom.

3. A process according to claims 1 and 2, characterised in that the water is introduced into the filter basin from below through the basin bottom.

4. A process according to claims 1 to 3, characterised in that the liquid phase is drained off in steps until useful separation of solid and liquid phases no longer takes place.

5. A process according to claims 1 to 4, characterised in that, after the last settling step, all outlets in the filter basin are opened and the solid phase still in the filter basin is ventilated by natural convection through the bottom of the filter basin.

6. Equipment for carrying out the process according to claims 1 to 5, with a concrete filter basin, with a filter plate incorporating flow holes and an impermeable base plate located with a gap thereunder, the surface of the bare plate sloping down to at least one outlet, characterised in that the filter plate (12) takes the form of a slotted bottom whose slots (15) are covered by sieve grates (16).

7. Equipment according to claim 6, characterised in that the slotted bottom (12) is formed of concrete slabs (17) of trapezoidal section, which taper down to the base plate (14) and have recesses (18) on their sides facing the basin interior, in which the sieve grates (16) are fitted flush with the top edge (19).

8. Equipment according to claims 6 and 7, characterised in that the concrete slabs (17) lie on transverse stanchions (20) and at both ends lie in sockets (21) in the basin walls (4, 5, 7).

9. Equipment according to claims 6 to 8, characterised in that the base plate (14) and all joints between it and the basin walls (4, 5, 7) are sealed with a material (8) that is resistant to corrosive liquids.

10. Equipment according to claims 6 to 9, characterised in that the basin walls (4, 5, 7) have several openings (22) between the filter plate (12) and the base plate (14), the openings being sealable against the pressure inside the basin interior by means of stoppers (23) operated from outside.

11. Equipment according to claims 6 to 10, characterised in that a drain pipe (35) connects up with the outlet (34) in the base plate (14) and incorporates a valve (37) opened and closed by a servomotor (36).

12. Equipment according to claims 6 to 11, characterised in that a pump (39) is installed in the drain pipe (35) before the valve (37) in the flow direction (38).

13. Equipment according to claims 6 to 11, characterised in that the action of the servomotor (36) and the pump (39) is controlled by a regulator device (41), which is itself controllable by a level switch (42) and a regulating tube (43).

14. Equipment according to claims 6 to 13, characterised in that the level switch (42) comprises a height-adjustable float which, in accordance with the charge of the liquid manure (2), can be set with its underside (47) on the manure surface (51).

15. Equipment according to claims 6 to 14, characterised in that the regulating tube (43) comprises a plastics pipe (52) fixed in place on one basin bottom opening (48), e. g. on a sieve grate (16), both ends of the tube being open and its top end (50) projecting above the maximum liquid manure level (51), the tube having a solid wall housing magnetic switches (54, 55) operated by a ferrous floating ball (53), one switch being near the filter plate (12) and the other being positioned thereabove at a distance (A).

16. Equipment according to claim 15, characterised in that the floating ball (53) is provided with a coating of corrosion-resisting material.

17. Equipment according to claims 6 to 16, characterised in that the float switch (42) initiates the opening of the valve (37) and the starting of the pump (39) via the regulator (41) in precedence over the magnetic switches (54, 55).

18. Equipment according to claims 6 to 17, characterised in that the magnetic switch (54) next to the filter plate (12) closes the valve (37) and at the same time stops the pump (39).

19. Equipment according to claims 6 to 18, characterised in that the second magnetic switch (55) located at a distance (a) above the magnetic switch (54) next to the filter plate (12) re-opens the valve (57) and starts the pump (39).

20. Equipment according to claims 15 to 19, characterised in that the distance (A) of the magnetic switch (55) from the filter plate (12), and the distance (a) of the magnetic switches (54, 55) from each other, is adjustable.

21. Equipment according to claims 6 to 20, characterised in that filter tubes (11), known per se, are fitted to the sieve gates (16), the filter holes of the tubes being opened after the last draining-off of the liquid phase.

22. A process for separating a liquid waste product into a liquid and a solid phase by means of a filter basin, in which the residence time of the waste product left to settle therein is prolonged until such time as a solid layer is formed on top and a liquid phase at the bottom, whereupon the liquid phase is drained off by opening at least one closable outlet, characterised in that sludge is used as the waste product, which is mixed with a fermentable substance before its residence time.

23. A process according to claim 22, characterised in that, depending on the composition thereof, the sludge is mixed with the additive in the weight proportion of approximately 100 : 1 to 100 : 1.6.

24. A process according to claims 22 and 23, characterised in that a mixture of fine wood particles, such as saw-dust and shavings, is used as the additive.

25. A process according to claim 22 or 23, characterised in that green fibre material, such as grass, ferns, nettles or the like, is used as the additive.

26. A process according to claim 22 or 23, characterised in that agricultural waste product, such as chopped corn and maize straw, reeds, or the like, is added as the additive.

27. A process according to one or more of claims 22 to 26, characterised in that a liquid is introduced into the bottom of the filter basin and then the mixture of sludge and additive is poured in, and, after deposition of the solid phase, the liquid phase is drained off until the solid phase of the mixture has approximately reached the bottom of the filter basin, and that the outflow of the liquid phase is then discontinued and the formation of the solid phase at the top and the liquid phase at the bottom is again awaited, whereupon the outlet is re-opened.

28. A process according to claims 22 to 27, characterised in that, before the introduction of the mixture of sludge and additive, the bottom of the filter basin is filled with water up to its upper edge.

29. A process according to claims 22 to 28, characterised by the features of claims 3 to 5.

30. Equipment for carrying out the process according to claims 22 to 29, characterised in that it comprises a filter basin (1) according to the features of claims 6 to 21, with which is associated a tank (104) with an agitator (110) and a dosing device (112, 113) for the additive (135).

31. Equipment according to claim 30, characterised in that a supply basin (102) for the sludge (103) is connected to the tank (104).

32. Equipment according to claims 30 and 31, characterised in that the supply basin (102) is located higher than the tank (104) and the latter (104) higher than the filter basin (1).

33. Equipment according to claims 30 to 32, characterised in that the connecting pipelines (106) between the supply basin (102) and the tank (104) on the one hand and between the latter (104) and the filter basin (1) on the other are opened and closed by squeezer valves (107, 109).

34. Equipment according to claims 30 to 33, characterised in that a hopper (112) for the additive (135) is associated with the tank (104) which incorporates an agitator (110) in its interior (101).

**Revendications**

1. Procédé de préparation d'engrais solides par séparation de purin en une phase solide et en une phase liquide au moyen d'un bassin de filtration dans lequel le purin est introduit et laissé en repos jusqu'à ce qu'une phase solide et une phase liquide se soient déposées respectivement en haut et en bas, après quoi on ouvre, pour en évacuer la phase liquide, au moins une ouverture obturale, caractérisé en ce que le fond du bassin de filtration est mis sous un liquide, après quoi on introduit le purin et, après dépôt de la phase solide, on vidange la phase liquide jusqu'à ce que la phase solide ait sensiblement atteint le fond du bassin de filtration, après quoi on interrompt l'évacuation de la phase liquide, on attend à nouveau un dépôt de la phase solide en haut et de la phase liquide en bas et on ouvre alors à nouveau l'évacuation.

2. Procédé selon la revendication 1, caractérisé en ce qu'avant d'introduire le purin on envoie dans le bassin de filtration de l'eau au moins jusqu'au niveau supérieur du fond.

3. Procédé selon la revendication 1 et 2, caractérisé en ce que l'eau est amenée par le dessous à travers le fond du bassin de filtration.

4. Procédé selon les revendications 1 à 3, caractérisé en ce que l'on répète l'évacuation de la phase liquide par étapes jusqu'à ce qu'il ne se produise plus de dépôt notable de phase liquide et solide.

5. Procédé selon les revendications 1 à 4, caractérisé en ce qu'après la dernière décantation on ouvre toutes les ouvertures d'écoulement du bassin de filtration et on aère, par convection naturelle, à partir du fond du bassin de filtration, la phase solide restant dans ce dernier.

6. Dispositif pour la mise en œuvre du procédé selon les revendications 1 à 5 avec un bassin de filtration en béton, comportant une dalle filtrante dans laquelle sont ménagées des ouvertures d'écoulement et au-dessous de laquelle est disposée une sous-dalle en laissant subsister entre dalle et sous-dalle un espace intermédiaire, la face supérieure de la sous-dalle présentant une déclivité en direction d'au moins une ouverture d'écoulement, caractérisé en ce que la dalle filtrante (12) est conçue sous forme d'un fond à claires-voies dont les fentes (15) sont couvertes par des grilles de criblage (16).

7. Dispositif selon la revendication 6, caractérisé en ce que le fond à claires-voies (12) est formé de poutres en béton (17) à section trapézoïdale qui ont une forme conique en direction de la sous-dalle (14) et présentent, de leur côté tourné vers l'intérieur du bassin, des feuillures (18) dans lesquelles les grilles de criblage (16) reposent à fleur du niveau supérieur (19).

8. Dispositif selon les revendications 6 et 7, caractérisé en ce que les poutres en béton (17) reposent sur des traverses (20) dirigées en travers de la direction longitudinale de ces poutres, et, à leurs deux extrémités, sur des socles (21) des parois (4, 5, 7) du bassin.

9. Dispositif selon les revendications 6 à 8, caractérisé en ce que la sous-dalle (14) ainsi que tous les joints entre elles et les parois (4, 5, 7) du bassin sont étanchéifiés par un matériau (8) résistant aux liquides corrosifs.

10. Dispositif selon les revendications 6 à 9, caractérisé en ce que les parois (4, 5, 7) du bassin présentent, entre la dalle filtrante (12) et la sous-dalle (14), plusieurs ouvertures (22) qui peuvent être fermées, de façon étanche à l'eau sous pression côté intérieur du bassin, au moyen de bondes (23) actionnées de l'extérieur.

11. Dispositif selon les revendications 6 à 10, caractérisé en ce que dans l'ouverture d'écoulement (34) dans la sous-dalle (14) débouche une conduite d'écoulement (35) dans laquelle est disposée une vanne (37) ouverte et fermée par l'intermédiaire d'un servomoteur (36).

12. Dispositif selon les revendications 6 à 11, caractérisé en ce qu'en amont de la vanne (37) une pompe de transport (39) est disposée dans la conduite d'écoulement (35).

13. Dispositif selon les revendications 6 à 12, caractérisé en ce que la mise en service du servomoteur (36) et de la pompe de transport (39) est commandée par un régulateur (41) lui-même commandé par un interrupteur de niveau (42) et par un tuyau de régulation (43).

14. Dispositif selon les revendications 6 à 13, caractérisé en ce que l'interrupteur de niveau (42) se compose d'un interrupteur à flotteur réglable en hauteur qui, après remplissage du purin (2), peut être posé par son bord inférieur (47) sur la surface (51) du purin.

15. Dispositif selon les revendications 6 à 14, caractérisé en ce que le tuyau de régulation (43) se compose d'un tube en matière synthétique (52) à paroi pleine fixé sur une ouverture (48) du fond, par exemple sur une grille de criblage (16), ce tube étant ouvert à ses deux extrémités, son extrémité supérieure se trouvant au-dessus du niveau maximum (51) de purin, et dans lequel sont disposés, l'un à proximité de la dalle filtrante (12), l'autre à une distance (A) au-dessus de cette dalle, deux interrupteurs magnétiques (54, 55) commandés par une boule flottante (53) à teneur en fer qui peut se déplacer librement par rapport à ce tube.

16. Dispositif selon la revendication 15, caractérisé en ce que la boule flottante (53) est revêtue d'une couche extérieure anti-corrosion.

17. Dispositif selon les revendications 6 à 16, caractérisé en ce que l'interrupteur à flotteur (42) déclenche, en priorité sur les interrupteurs magnétiques (54, 55), l'ouverture de la vanne (37) et la mise en marche de la pompe de transport (39), par l'intermédiaire du régulateur (41).

18. Dispositif selon les revendications 6 à 17, caractérisé en ce que l'interrupteur magnétique (54) le plus proche de la dalle filtrante (12) ferme la vanne (37) et, simultanément, met hors service la pompe (39).

19. Dispositif selon les revendications 6 à 18, caractérisé en ce que le deuxième interrupteur magnétique (55) disposé à une distance (a) au-dessus de l'interrupteur magnétique (54) le plus proche de la dalle filtrante (12) rouvre la vanne (37) et remet en marche la pompe (39).

20. Dispositif selon les revendications 15 à 19, caractérisé en ce que la distance (A) entre l'interrupteur magnétique (55) et la dalle filtrante (12) et la distance (a) entre les deux interrupteurs magnétiques (54, 55) sont réglables.

21. Dispositif selon les revendications 6 à 20, caractérisé en ce que sur les grilles de criblage (16) sont disposés des tubes filtrants (11) connus en soi dont les ouvertures de filtration sont destinées à être ouvertes après la dernière évacuation de la phase liquide.

22. Procédé de séparation de déchets liquides en une phase solide et liquide au moyen d'un bassin de filtration dans lequel le temps de séjour des déchets laissés en repos est prolongé jusqu'à ce que la couche formée par la phase solide se soit déposée en haut et que la phase liquide se soit déposée en bas, et duquel la phase liquide est alors évacuée par ouverture d'au moins une ouverture d'écoulement obturable, caractérisé en ce que l'on utilise comme déchets des boues de curage mélangées, avant leur temps de séjour, à un additif susceptible de fermenter.

23. Procédé selon la revendication 22, caractérisé en ce que selon la composition des boues de curage on mélange à celles-ci l'additif dans un rapport pondéral d'environ 100 : 1 à 100 : 1,6.

24. Procédé selon la revendication 22 et 23, caractérisé en ce que l'on utilise comme additif un mélange de fibres de bois en copeaux fins, par exemple des copeaux de sciage et de rabotage.

25. Procédé selon la revendication 22 ou 23, caractérisé en ce que l'on ajoute comme additif des fibres vertes telles que de l'herbe, des orties, fougères, etc.

26. Procédé selon la revendication 22 ou 23, caractérisé en ce que l'on mélange comme additif des déchets agricoles déchiquetés, tels que paille de blé et de maïs, joncs, etc.

27. Procédé selon une ou plusieurs des revendications 22 à 26, caractérisé en ce que le fond du bassin de filtration est mis sous liquide, après quoi le mélange de boues de curage et d'additif est introduit et, après dépôt de la phase solide, la phase liquide est évacuée jusqu'à ce que la phase solide du mélange atteigne sensiblement le fond du bassin, et en ce qu'à ce moment on interrompt l'écoulement de la phase liquide, on attend à nouveau un dépôt de la phase solide en haut et de la phase liquide en bas, après quoi on rouvre l'écoulement.

28. Procédé selon les revendications 22 à 27, caractérisé en ce qu'avant d'introduire le mélange de

**0 052 722**

boues de curage et d'additif on envoie dans le bassin de filtration de l'eau au moins jusqu'au niveau supérieur du fond.

29. Procédé selon les revendications 22 à 28, caractérisé par les caractéristiques des revendications 3 à 5.

30. Dispositif pour la mise en œuvre du procédé selon les revendications 22 à 29, caractérisé en ce qu'il se compose d'un bassin de filtration (1) selon les caractéristiques des revendications 6 à 21, auquel est affecté un réservoir (104) avec un dispositif de brassage (110) et un dispositif de dosage (112, 113) pour l'additif (135).

31. Dispositif selon la revendication 30, caractérisé en ce qu'un bassin de stockage (102) de boues de curage (103) est installé en amont du réservoir (104).

32. Dispositif selon les revendications 30 et 31, caractérisé en ce que le bassin de stockage (102) est disposé plus haut que le réservoir (104) lui-même plus haut que le bassin de filtration (1).

33. Dispositif selon les revendications 30 à 32, caractérisé en ce que les conduites de liaison (106) entre le bassin de stockage (102) et le réservoir (104) d'une part et entre ce dernier (104) et le bassin de filtration (1) d'autre part sont fermées et ouvertes par des valves à écrasement (107, 109).

34. Dispositif selon les revendications 30 à 33, caractérisé en ce qu'au réservoir (104) est affecté une trémie de stockage (112) pour l'additif et en ce que dans l'enceinte (104') de ce réservoir est disposé un dispositif de brassage (110).

14

Fig.2

Fig.1

Fig.3

Fig.4

Fig.5

Fig.6